# FASCICULE DE BREVET EUROPEEN

(11) **EP 3 085 988 B1**
(45) Date de publication et mention de la délivrance du brevet: **12.09.2018**
(21) Numéro de dépôt: 16166562.5
(22) Date de dépôt: 22.04.2016
(51) Int. Cl.: F16F 9/48, F16F 13/00, B62K 25/04, F16F 9/36, F16F 9/346, F16F 9/32, F16F 9/02, B62K 25/08

(54) **DISPOSITIF DE SUSPENSION PNEUMATIQUE**
LUFTFEDERUNGSSYSTEM
PNEUMATIC SUSPENSION DEVICE

(30) Priorité: 22.04.2015 FR 1553588
(43) Date de publication de la demande: 26.10.2016
(73) Titulaire: Bossard, Olivier, 31240 Saint Jean (FR)
(72) Inventeur: Bossard, Olivier, 31240 Saint Jean (FR)
(74) Mandataire: Ipside

(56) Documents cités:
- EP-A1- 2 267 332
- EP-A2- 2 634 076
- US-A1- 2003 001 358
- US-B1- 8 123 006

## Description

### DOMAINE TECHNIQUE

La présente invention relève du domaine des équipements de véhicules.

Elle concerne plus particulièrement une partie de suspension remplaçant un ressort hélicoïdal, typiquement mais non exclusivement pour deux roues de type moto ou vélo.

### ÉTAT DE LA TECHNIQUE

On connaît, dans ce domaine, divers dispositifs de suspension, utilisant par exemple un ressort et un amortisseur hydraulique coaxiaux. De tels dispositifs sont par exemple décrits dans le brevet FR 2 897 915 (« système d'amortissement à détente rapide monté en jambe de force ») du même demandeur. De façon connue, un amortisseur comprend un corps de forme tubulaire dont les extrémités sont obturées par des parois, et dans lequel peut se translater un piston prolongé par une tige traversant l'une des parois d'extrémités, ledit piston délimitant deux chambres. Dans le cas d'amortisseur hydraulique, il est communément prévu des alésages entre les deux chambres pour permettre au fluide de passer de l'une à l'autre selon des lois prédéterminées. En complément, des moyens sont éventuellement prévus pour compenser la variation de volume de la tige.

De tels amortisseurs sont usuellement associés à des systèmes de suspension, de type ressort hélicoïdal, qui créent une fonction de déplacement élastique de la suspension.

Le document US 8,123,006 décrit une fourche de suspension comprenant un système pneumatique remplaçant le ressort hélicoïdal. La fourche de suspension comprend un corps doté d'une cavité cylindrique dans laquelle un piston est engagé en coulissement et divise ladite cavité cylindrique en une chambre supérieure et une chambre inférieure. Une chambre oblongue s'étend longitudinalement sur la surface interne de la chambre supérieure, et permet un transfert de gaz entre les chambres supérieure et inférieure. La chambre oblongue est agencée à l'extrémité inférieure de la chambre supérieure de sorte qu'un transfert de gaz est réalisé lorsque la fourche de suspension dans une position maximale d'extension. Le transfert de gaz d'une chambre à l'autre permet de réaliser un équilibre des pressions des gaz entre les deux chambres.

Lors du passage du piston au regard de la chambre oblongue, cette dernière est ouverte simultanément sur la chambre inférieure et sur la chambre supérieure, provoquant une variation importante de raideur lors du fonctionnement du système de suspension. Cette variation de raideur du système de suspension peut être préjudiciable à un utilisateur dans la mesure où elle peut influer sur le comportement dynamique du véhicule et provoquer, non seulement des désagréments au niveau du confort de conduite, mais aussi des accidents.

### EXPOSÉ DE L'INVENTION

La présente invention vise un système de suspension dans lequel un système purement pneumatique vient remplacer le ressort hélicoïdal, et demeure cependant facile d'utilisation, avec un nombre de réglages de fonctionnement réduit. La présente invention vise également à permettre un équilibre des pressions des gaz présents dans les chambres internes d'un système de suspension sans l'utilisation de valve de remplissage, tout en évitant les variations de raideur du système de suspension lors son utilisation, ces variations pouvant être préjudiciables à la santé et au confort d'un utilisateur.

Elle vise ainsi sous un premier aspect un système de suspension comprenant un corps pourvu d'une cavité cylindrique dans laquelle est monté en coulissement un piston divisant la cavité cylindrique en deux chambres de travail : une chambre inférieure et une chambre supérieure recevant chacune un gaz, le piston étant relié à une tige de piston sortant de la cavité cylindrique au travers d'une bague d'étanchéité.

Le système de suspension comporte par ailleurs un tube externe, le corps venant coulisser au sein de ce tube externe, ledit tube externe étant engagé autour de la tige du piston et comportant en son extrémité libre un bouchon inférieur à laquelle est solidarisée l'extrémité de la tige de piston, l'espace entre le bouchon inférieur du tube externe et la bague d'étanchéité déterminant au sein du tube externe une troisième chambre remplie de gaz par une valve de précharge.

Le système de suspension comporte une seule valve de remplissage des chambres inférieure et supérieure, et des moyens de transfert de gaz de l'une des deux chambres de travail vers l'autre, selon des conditions prédéterminées et les moyens de transfert de gaz sont constitués d'une chambre latérale ménagée dans la paroi interne du corps cylindrique, ladite chambre latérale étant adaptée à venir successivement au regard de la chambre inférieure et de la chambre supérieure selon la position du piston dans le corps cylindrique.

Ainsi, la chambre latérale n'est jamais ouverte simultanément sur la chambre inférieure et la chambre supérieure, et ne génère pas de variation brusque de raideur du système de suspension.

Les moyens de transfert de gaz, de l'une des chambres de travail vers l'autre, permettent avantageusement le transfert d'une très faible quantité de gaz, par exemple de l'ordre de quelques millimètres cubes, lorsque la température ambiante est de l'ordre de vingt à trente degrés Celsius, de sorte à éviter un brusque changement de raideur du système de suspension.

De la sorte, lors des mouvements longitudinaux du piston dans le tube interne dus aux mouvements du véhicule sur une route, la chambre latérale va venir successivement au regard de la première et de la seconde chambre interne, et va donc contribuer à équilibrer progressivement les pressions entre les deux chambres, en transportant du fluide de la chambre la plus pressurisée vers la chambre la moins pressurisée.

La chambre latérale est ménagée, dans la paroi interne du corps cylindrique, en tout point, en fonction de la loi d'amortissement, c'est-à-dire, le comportement dynamique, désirée par un utilisateur.

Dans un mode de réalisation particulier, la chambre est de dimension longitudinale (c'est à dire selon la direction de l'axe des tubes) supérieure à l'épaisseur d'un joint d'étanchéité disposé entre une face externe du piston et la surface interne de la cavité cylindrique. De la sorte, la chambre latérale n'est jamais ouverte simultanément sur la chambre inférieure et la chambre supérieure, afin d'éviter toute variation brusque de raideur du système de suspension.

Le transfert de gaz est donc réalisé lorsque le joint d'étanchéité est en regard de la chambre latérale.

En outre, lorsque la chambre latérale est totalement en regard du piston, aucun transfert de gaz n'est réalisé (ou la quantité de gaz transférée est négligeable). Une quantité prédéterminée de gaz étant transférée entre les chambres inférieure et supérieure, l'équilibrage est réalisé de manière fiable, sans fuite de gaz intempestive.

Dans le but de favoriser un équilibrage des pressions dès lors que des mouvements longitudinaux de faible ampleur sont enregistrés par la suspension, la chambre latérale est avantageusement mais non obligatoirement ménagée au voisinage de la position de repos du piston, c'est à dire de sa position lorsque le véhicule n'est pas en roulement.

Dans un mode plus particulier de réalisation, la chambre latérale est ménagée dans la cavité cylindrique à une distance longitudinale inférieure à 10% de la course du piston dans ladite cavité cylindrique.

Dans un mode de réalisation particulier, le système de suspension comporte un ressort inséré dans la chambre inférieure, adapté à repousser le piston vers la chambre supérieure.

Dans un mode de réalisation particulier, la tige de piston est susceptible de recevoir une ou plusieurs cales de réglage sous forme d'extensions longitudinales.

En d'autres termes, l'invention vise notamment un système de suspension à tubes coaxiaux, lesdits tubes déterminant entre eux trois chambres pressurisées dont deux chambres internes déterminées dans le tube interne en continuité le long de l'axe, lesdites deux chambres internes étant séparées par un piston mobile en translation le long dudit axe. Le système comporte une chambre latérale ménagée dans la paroi du tube interne, ladite chambre latérale étant adaptée à venir au regard de la première ou de la second chambre interne, selon la position du piston dans le tube interne.

Dans un mode de réalisation particulier, le dispositif de suspension comporte une valve ouverte sur la chambre supérieure de la cavité cylindrique et une valve ouverte sur la troisième chambre (tube externe). La valve ouverte sur la chambre supérieure permet de déterminer la raideur de la suspension, et la valve ouverte sur la troisième chambre permet de déterminer la longueur de la suspension.

Dans un mode de réalisation particulier, la chambre latérale est formée par un perçage traversant du corps cylindrique, combiné à l'utilisation d'une bague extérieure solidarisée à ce corps cylindrique, et venant fermer l'ouverture externe dudit perçage traversant.

Avantageusement, la bague extérieure est solidarisée au corps cylindrique de manière amovible, de sorte qu'il est possible de régler la pression de la chambre inférieure en fonction des besoins, et notamment dépressuriser cette chambre. Il y a lieu de noter que la valve ouverte sur la chambre supérieure permet le réglage de la pression de ladite chambre supérieure.

L'invention vise également une fourche de suspension de moto, comportant au moins un système de suspension tel qu'exposé.

Dans un mode de réalisation particulier, la fourche de suspension comporte deux système de suspension tels qu'exposés, l'un des systèmes de suspension comportant uniquement une valve ouverte sur sa chambre supérieure, et l'autre système de suspension comportant uniquement une valve ouverte sur sa troisième chambre.

Dans un mode de réalisation particulier de la fourche de suspension dotée de deux tiges parallèles, l'une des tiges de suspension est de type hydraulique, et l'autre tige comporte un système de suspension tel qu'exposé.

L'invention vise encore un véhicule disposant d'amortisseurs pour amortir les débattements de la suspension, ces amortisseurs comportant des dispositifs de suspension étant tels qu'exposé plus haut.

Dans un mode de réalisation particulier, le véhicule est prévu pour un usage particulier du type tous-terrains ou sportif.

### PRÉSENTATION DES FIGURES

Les caractéristiques et avantages de l'invention seront mieux appréciés grâce à la description qui suit, description qui expose les caractéristiques de l'invention au travers d'un exemple non limitatif d'application.

La description s'appuie sur les figures annexées qui représentent :
- Figure 1 : un schéma de principe des éléments impliqués dans le dispositif,
- Figure 2a : une vue en coupe des deux tubes internes du dispositif,
- Figure 2b : une vue de côté des deux tubes internes du dispositif,
- Figures 2c et 2d : des vues de détail de la vue en coupe de la figure 2a,
- Figure 3a : une vue en coupe de l'ensemble des tubes formant la suspension,
- Figure 3b : une vue de côté de l'ensemble des tubes formant la suspension,
- Figures 3c et 3d : des vues de détail de la vue de la figure 3a.

### DESCRIPTION DÉTAILLÉE D'UN MODE DE RÉALISATION DE L'INVENTION

L'invention trouve sa place dans le cadre d'une suspension de véhicule. L'exemple décrit dans la suite est celui d'une fourche de suspension de moto. Bien entendu, le système de suspension selon l'invention peut être adapté à tout type de véhicule (automobile, moto, vélo,...) ou tout autre dispositif. Cette fourche de suspension comporte par exemple un système d'amortissement classique et un système de suspension pneumatique, décrit ci-après.

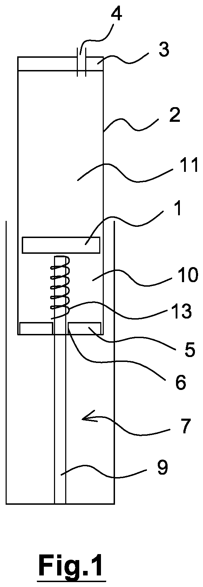

Comme on le voit sur la figure 1, qui illustre de façon très schématique les éléments composant ce système de suspension, celui-ci est agencé selon un axe longitudinal principal Z. On comprend que le système de suspension est destiné à être fixé par une des extrémités à une partie non suspendue de ce véhicule (non illustrée sur les figures), par exemple la roue, et par son autre extrémité à une partie suspendue (également non figurée) du véhicule par exemple le châssis. Dans le présent exemple de réalisation, les extrémités supérieure et inférieure du système de suspension sont indifféremment fixées à la roue ou au châssis.

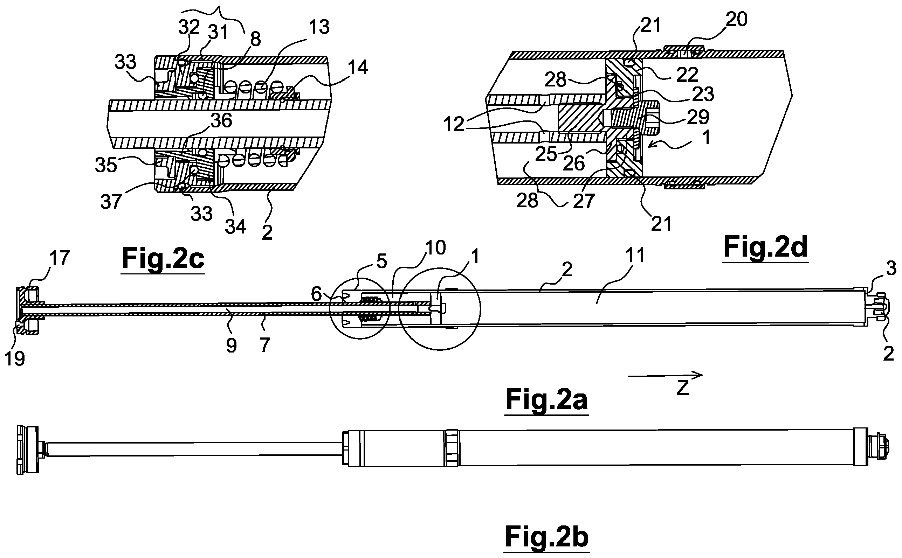

Ainsi que représenté sur les figures 2a à 2d, le système de suspension comporte en premier lieu un piston **1**, mobile en translation selon l'axe longitudinal **Z** au sein d'un corps cylindrique **2**. Le corps cylindrique 2 est fermé en ses deux extrémités. Il est fermé en son extrémité supérieure destinée à être solidarisée par exemple au châssis du véhicule (en haut sur la figure 1), par un bouchon supérieur **3** doté d'une valve supérieure **4.** Le corps cylindrique 2 est fermé, d'autre part, en son extrémité inférieure (en bas du tube sur la figure 1), par un bouchon intermédiaire **5** formant bague d'étanchéité et présentant un alésage traversant **6,** préférentiellement concentrique au corps cylindrique 2, ledit bouchon intermédiaire 5 étant de dimensions adaptées au passage d'une tige de piston **7** rigide, liée au piston 1 en son extrémité supérieure, ladite tige de piston 7 étant engagée en glissement dans ledit alésage traversant 6, un élément d'étanchéité tel qu'un joint torique **8** assurant l'étanchéité autour de la tige 7 au niveau de l'alésage 6 du bouchon intermédiaire 5. Les bouchons supérieur 3 et intermédiaire 5 sont fixés au tube cylindrique 2 par des méthodes connues de l'homme de l'art, par exemple par vissage. Tout autre mode de fixation est cependant utilisable, et l'un au moins de ces bouchons 3, 5 peut être formé en tant que partie intégrante du corps cylindrique 2. Dans le présent exemple de réalisation, la tige de piston 7 est creuse en ce qu'elle comporte un alésage axial (c'est à dire selon l'axe longitudinal du système de suspension) **9.**

La position du piston 1 au sein du corps cylindrique 2 détermine de ce fait deux chambres de travail, une chambre inférieure **10,** dans laquelle transite notamment la tige de piston 7, et une chambre supérieure **11,** accessible depuis la valve supérieure 4. Dans la présente invention, les chambres inférieure 10 et supérieure 11, sont remplies de gaz, par exemple de l'air ou de l'azote ou tout autre gaz. On comprend que, de la sorte, le mouvement du piston 1 dans le corps cylindrique 2 provoque une compression dans l'une des deux chambres de travail 8, 9, et simultanément une détente dans l'autre chambre de travail, selon le sens de déplacement dudit piston 1 au sein du corps cylindrique 2.

La tige de piston 7 comporte, dans le présent exemple non limitatif, deux lumières traversantes **12,** perpendiculaires à l'axe longitudinal, et adaptées à mettre en relation la cavité formée par l'alésage axial 9 de la tige de piston 7 et la chambre inférieure 10.

Un ressort **13** est inséré dans la chambre inférieure 10. Ce ressort 13, de type spiral, prend place autour de la tige de piston 7. Il vient prendre appui, d'une part, sur la face interne (c'est à dire la face tournée vers l'intérieur du tube cylindrique 2) du bouchon intermédiaire 5, et, d'autre part, sur une coupelle **14** solidarisée à la tige de piston 7.

L'effet de ce ressort 7 est de tendre à repousser le piston 1 vers la chambre supérieure 11 lorsque le piston 1 arrive en fin de course au sein du corps cylindrique 2, c'est à dire au voisinage du bouchon intermédiaire 5.

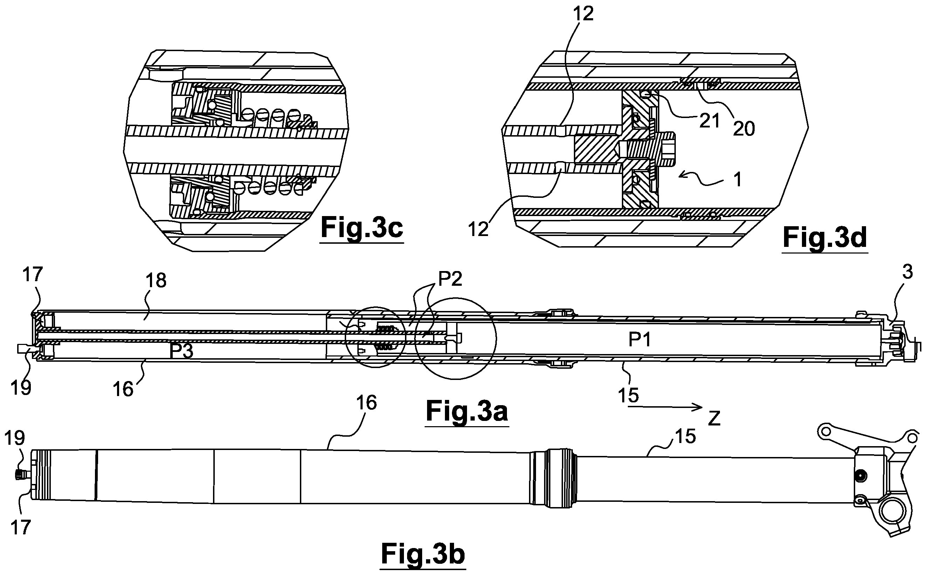

En figures 3a à 3d est représentée une forme de réalisation d'un système de suspension monté en jambe de force entre une partie non suspendue d'un véhicule, et une partie suspendue du véhicule.

Selon la forme de réalisation des figures 3a à 3d, l'agencement de jambe de force comporte un tube interne **15** et un tube externe **16** montés en coulissement l'un dans l'autre. Le tube interne 15 de jambe de force est fixé au corps cylindrique 2 au niveau du bouchon supérieur 3. Le corps cylindrique 2 est donc ici inséré dans le tube interne 15 auquel il est coaxial. Le tube externe 16 est monté en coulissement autour du tube interne 15 et est fixé à la tige de piston 7 au niveau d'un bouchon inférieur **17** recevant l'extrémité de cette tige de piston 7.

On comprend que, grâce à cet arrangement, une troisième chambre **18** est déterminée entre le bouchon intermédiaire 5, la tige de piston 7, le bouchon inférieur 17 et la surface interne du tube externe 16. Cette chambre est accessible par l'intermédiaire d'une valve inférieure **19,** traversant le bouchon inférieur 17. Dans le présent exemple de réalisation, cette troisième chambre 18 est remplie de gaz.

Selon la pression de gaz choisie par l'utilisateur pour cette troisième chambre 18, le piston 1 se trouve plus ou moins engagé au sein du corps cylindrique 2, et vient donc pressuriser plus ou moins le gaz inséré dans les chambres inférieure 10 et supérieure 11. Plus précisément, si la troisième chambre 18 est fortement pressurisée, le piston 1 va se trouver au voisinage du bouchon supérieur 3 du corps cylindrique 2, la chambre supérieure 11 fortement pressurisée et la chambre inférieure 10 moins pressurisée. De même, si la troisième chambre 18 est faiblement pressurisée, le piston 1 va se trouver au voisinage du bouchon intermédiaire 3 du corps cylindrique 2, la chambre supérieure 11 peu pressurisée et la chambre inférieure 10 fortement pressurisée. Le réglage de la pression dans la troisième chambre 18 détermine également la longueur du système de suspension au repos.

Le corps cylindrique 2 comporte ici des moyens calibrés de passage de gaz de la chambre inférieure 10 vers la chambre supérieure 11 ou inversement, et ce en fonction des mouvements du piston 1

Dans le présent exemple de réalisation, le système de suspension comporte, sur la face interne du corps cylindrique 2, au moins une chambre latérale **20** (voir notamment figure 2d) constituant ces moyens calibrés de passage de gaz entre les chambres. Dans le présent exemple, illustré par les figures, une seule chambre latérale 20 a été représentée. Il est cependant loisible d'en considérer un nombre quelconque. Comme on le voit sur cette figure, cette chambre latérale 20 peut être réalisée sous la forme d'un alésage radial non traversant ménagé dans la paroi du corps cylindrique. Sur la figure 2d est illustré le cas d'un perçage traversant du corps cylindrique 2, combiné à l'utilisation d'une bague extérieure solidarisée à ce corps cylindrique 2, et venant fermer l'ouverture externe dudit perçage traversant. Dans le présent exemple de réalisation, le volume utile de la chambre latérale 20 est de quelques millimètres cube. Un volume supérieur ou inférieur peut également être envisagé, selon les dimensions du système de suspension et le fonctionnement désiré de ce système.

La chambre latérale 20 est ici dimensionnée de sorte à ce que sa longueur selon l'axe longitudinal Z soit supérieure à la longueur utile d'un joint torique **21** qui vient créer l'étanchéité entre la chambre inférieure 10 et la chambre supérieure 11 au niveau de la face externe du piston 1. A titre illustratif, la chambre est ici de diamètre d'environ 2 mm, alors que la surface d'appui du joint torique sur la face interne du corps cylindrique 2 est inférieure à 1 mm.

Dans le présent exemple de réalisation, la chambre latérale 20 est ménagée dans le corps cylindrique 2 au voisinage du point de repos du piston 1 dans un réglage « normal » de remplissage de la troisième chambre 18, c'est à dire en un point du corps cylindrique 2 devant lequel le piston 1 va venir passer lors de chacune de ses oscillations dans ledit corps cylindrique 2.

Les matériaux et dimensions des divers éléments cités plus haut sont à la portée de l'homme du métier et ne sont donc pas détaillés plus avant ici.

### MODE DE FONCTIONNEMENT

Dans le cas d'une moto par exemple, l'utilisateur du véhicule vient initialement régler la pression dans la troisième chambre 18, par l'intermédiaire de la valve inférieure 19, déterminant ainsi la course du piston 1 et l'assiette de la moto. Il vient également régler la pression initiale régnant dans la chambre supérieure 11, par l'intermédiaire de la valve supérieure 4, déterminant ainsi la raideur du système de suspension.

Lors du roulement du véhicule, se traduisant par des mouvements verticaux du piston 1 au sein du corps cylindrique 2, le piston 12 vient passer devant la chambre latérale 20. A chaque passage, pendant un instant de durée fonction de la vitesse longitudinale du piston 1 dans la chambre latérale 20 et des dimensions de ladite chambre latérale 20 relativement au joint torique 21, le gaz contenue dans la chambre de travail 10, 11 la plus pressurisée peut s'écouler en passant le long de la face externe du piston 1 et dans la chambre latérale 20, vers la chambre de travail 10, 11 la moins pressurisée.

De la sorte, lors des allers et retours du piston 1 dans le corps cylindrique 2, les pressions dans les chambres inférieures 10 et supérieur 11 viennent progressivement s'égaliser.

Cette fonction d'égalisation progressive reste efficace lors d'une dilatation du gaz due par exemple à un échauffement du système de suspension du système de suspension, ou aux conditions d'environnement.

### AVANTAGES

On comprend qu'on remplace ici la partie ressort hélicoïdal d'un amortisseur « classique » par un dispositif pneumatique fournissant une réponse élastique analogue à celle d'un ressort hélicoïdal.

Le dispositif décrit plus haut permet donc aux utilisateurs de régler l'assiette et la raideur de la suspension de façon simple par deux réglages de pression, en dépit de la présence de trois chambres pressurisées. Ce mode de réglage simplifié à deux valves : précharge et raideur, va à l'encontre du préjugé de l'homme du métier, qui considère que pour atteindre le réglage de tous les paramètres de fonctionnement d'un système de suspension pneumatique à trois chambres, il est nécessaire de régler les pressions dans les trois chambres indépendamment, et donc de gérer trois valves de réglage.

Il est clair que l'invention décrite s'applique indifféremment à des suspensions de moto, vélo, automobile ou tout véhicule terrestre roulant.

### VARIANTES

Dans une variante de réalisation, l'une des tiges de suspension formant la fourche de suspension d'une moto est de type hydraulique, et l'autre tige est de type pneumatique tel que décrit plus haut.

Dans une variante de réalisation, la fourche de suspension de moto, comporte deux systèmes de suspension telles que décrits plus haut , l'un des systèmes de suspension comportant uniquement une valve ouverte sur la chambre supérieure, et l'autre système de suspension comportant uniquement une valve ouverte sur la troisième chambre. De cette manière, le réglage de raideur et d'assiette de la moto sont encore simplifiés pour l'utilisateur.

Dans une autre variante de réalisation, la tige de piston 7 est susceptible de recevoir une ou plusieurs cales de réglage sous forme d'extensions longitudinales, de même diamètre que ladite tige de piston 7, par exemple vissées dans l'alésage interne de cette tige de piston. Ces cales de réglage (non illustrées sur les figures), de longueur pouvant aller par exemple mais non limitativement de quelques millimètres à quelques centimètres, sont ajoutées au bout de la tige de piston 7 dans le cas ou la fourche de suspension doit être totalement détendue du fait des circonstances particulières d'utilisation. On déplace ainsi la position neutre du piston 1 au sein du corps cylindrique 2.

## Revendications

1. Système de suspension comprenant un corps (15) pourvu d'une cavité cylindrique (2) dans laquelle est monté en coulissement un piston (1) divisant la cavité cylindrique en deux chambres de travail (10, 11) : une chambre inférieure (10) et une chambre supérieure (11) recevant chacune un gaz, le piston (1) étant relié à une tige de piston (7) sortant de la cavité cylindrique (2) au travers d'une bague d'étanchéité (5),
le système de suspension comportant par ailleurs un tube externe (16), le corps (15) venant coulisser au sein de ce tube externe (16), ledit tube externe (16) étant engagé autour de la tige du piston (7) et comportant en son extrémité libre un bouchon inférieur (17) à laquelle est solidarisée l'extrémité de la tige de piston (7), l'espace entre le bouchon inférieur (17) du tube externe (16) et la bague d'étanchéité (5) déterminant au sein du tube externe (16) une troisième chambre (18), le système de suspension comportant une seule valve (4) de remplissage des chambres inférieure et supérieure, et des moyens de transfert de gaz de l'une des deux chambres de travail (10, 11) vers l'autre, selon des conditions prédéterminées, les moyens de transfert de gaz sont constitués d'une chambre latérale (20) ménagée dans la paroi interne du corps (15), ladite chambre latérale (20) étant adaptée à venir successivement au regard de la chambre inférieure (10) et de la chambre supérieure selon la position du piston (1) dans le corps (15), le système de suspension étant **caractérisé en ce que** la chambre latérale (20) est formée par un perçage traversant du corps (15), combiné à l'utilisation d'une bague extérieure solidarisée à ce corps (15), et venant fermer l'ouverture externe dudit perçage traversant, et **en ce que** la troisième chambre est remplie de gaz par une valve de précharge.

2. Système de suspension selon la revendication 1, **caractérisé en ce que** la chambre latérale (20) est de dimension longitudinale supérieure à l'épaisseur d'un joint d'étanchéité (21) disposé entre une face externe du piston (1) et la surface interne de la cavité cylindrique (2).

3. Système de suspension selon l'une des revendications 1 ou 2, **caractérisé en ce que** la chambre latérale (20) est ménagée au voisinage d'une position de repos prédéterminée du piston (1).

4. Système de suspension selon la revendication 3, **caractérisé en ce que** la chambre latérale (20) est ménagée dans la cavité cylindrique (2) à une distance longitudinale inférieure à 10% de la course du piston (1) dans ladite cavité cylindrique (2).

5. Système de suspension selon l'une quelconque des revendications 1 à 4, **caractérisé en ce qu'**il comporte un ressort (13) inséré dans la chambre inférieure (10), adapté à repousser le piston (1) vers la chambre supérieure (11).

6. Système de suspension selon l'une quelconque des revendications 1 à 5, **caractérisé en ce que** la tige de piston (7) est susceptible de recevoir une ou plusieurs cales de réglage sous forme d'extensions longitudinales.

7. Fourche de suspension de moto, **caractérisé en ce qu'**elle comporte au moins un système de suspension selon l'une des revendications 1 à 6.

8. Fourche de suspension de moto, **caractérisé en ce qu'**elle comporte deux systèmes de suspension selon l'une des revendications 1 à 6, l'un des systèmes de suspension comportant uniquement une valve (4) ouverte sur sa chambre supérieure (11), et l'autre système de suspension comportant uniquement une valve (19) ouverte sur sa troisième chambre (18).

9. Fourche de suspension de moto dotée de deux tiges parallèles, **caractérisé en ce que** l'une des tiges de la fourche est de type hydraulique, et l'autre tige comporte un système de suspension selon l'une des revendications 1 à 6.

## Patentansprüche

1. Federungssystem, umfassend einen Körper (15), der mit einem zylindrischen Hohlraum (2) versehen ist, in dem ein Kolben (1) gleitend montiert ist, der den zylindrischen Hohlraum in zwei Arbeitskammern (10, 11) unterteilt: eine untere Kammer (10) und eine obere Kammer (11), welche jede ein Gas aufnehmen, wobei der Kolben (1) mit einer Kolbenstange (7) verbunden ist, die durch einen Dichtungsring (5) hindurch aus dem zylindrischen Hohlraum (2) austritt,
wobei das Federungssystem darüber hinaus ein Außenrohr (16) umfasst, wobei der Körper (15) innerhalb dieses Außenrohrs (16) gleitet, wobei das Außenrohr (16) um die Stange des Kolbens (7) herum eingreift und an seinem freien Ende einen unteren Stopfen (17) umfasst, an dem das Ende der Kolbenstange (7) fest verbunden ist, wobei der Raum zwischen dem unteren Stopfen (17) des Außenrohrs (16) und dem Dichtungsring (5) innerhalb des Außenrohrs (16) eine dritte Kammer (18) bestimmt,
wobei das Federungssystem ein einziges Ventil (4) zum Befüllen der unteren und oberen Kammer, und Mittel zum Übertragen von Gas nach vorbestimmten Bedingungen von einer der zwei Arbeitskammern (10, 11) zur anderen umfasst, die Gasübertragungsmittel aus einer seitlichen Kammer (20) bestehen, die in der Innenwand des Körpers (15) ausgestaltet ist, wobei die seitliche Kammer (20) dazu ausgebildet ist, sich je nach der Stellung des Kolbens (1) im Körper (15) nacheinander der unteren Kammer (10) und der oberen Kammer zuzuwenden, wobei das Federungssystem **dadurch gekennzeichnet ist, dass** die seitliche Kammer (20) von einer Durchgangsbohrung des Körpers (15), kombiniert mit der Verwendung eines fest mit diesem Körper (15) verbundenen äußeren Rings, gebildet wird und die Außenöffnung der Durchgangsbohrung verschließt, und dadurch, dass die dritte Kammer über ein Vorladeventil mit Gas befüllt wird.

2. Federungssystem nach Anspruch 1, **dadurch gekennzeichnet, dass** die seitliche Kammer (20) von einer Längsabmessung ist, die größer ist als die Dicke eines Dichtungsstreifens (21), der zwischen einer Außenseite des Kolbens (1) und der Innenfläche des zylindrischen Hohlraums (2) angeordnet ist.

3. Federungssystem nach einem der Ansprüche 1 oder 2, **dadurch gekennzeichnet, dass** die seitliche Kammer (20) in der Nähe einer vorbestimmten Ruhestellung des Kolbens (1) ausgestaltet ist.

4. Federungssystem nach Anspruch 3, **dadurch gekennzeichnet, dass** die seitliche Kammer (20) im zylindrischen Hohlraum (2) auf einer Längsdistanz von kleiner als 10 % des Hubs des Kolbens (1) im zylindrischen Hohlraum (2) ausgestaltet ist.

5. Federungssystem nach einem der Ansprüche 1 bis 4, **dadurch gekennzeichnet, dass** es eine in der unteren Kammer (10) eingesetzte Feder (13) umfasst, die die dazu ausgebildet ist, den Kolben (1) zur oberen Kammer (11) hin zurückzudrängen.

6. Federungssystem nach einem der Ansprüche 1 bis 5, **dadurch gekennzeichnet, dass** die Kolbenstange (7) einen oder mehrere Regelkeile in Form von Längserstreckungen aufnehmen kann.

7. Motorradfedergabel, **dadurch gekennzeichnet, dass** sie mindestens ein Federungssystem nach einem der Ansprüche 1 bis 6 umfasst.

8. Motorradfedergabel, **dadurch gekennzeichnet, dass** sie zwei Federungssysteme nach einem der Ansprüche 1 bis 6 umfasst, wobei eines der Federungssysteme nur ein offenes Ventil (4) an seiner oberen Kammer (11) umfasst, und das andere Federungssystem nur ein offenes Ventil (19) an seiner dritten Kammer (18) umfasst.

9. Motorradfedergabel, die mit zwei parallelen Stangen ausgestattet ist, **dadurch gekennzeichnet, dass** eine der Stangen der Gabel vom hydraulischen Typ ist, und die andere Stange ein Federungssystem nach einem der Ansprüche 1 bis 6 umfasst.

## Claims

1. Suspension system comprising a body (15) provided with a cylindrical cavity (2) in which is slidably mounted a piston (1) dividing the cylindrical cavity into two working chambers (10, 11): a lower chamber (10) and an upper chamber (11) each receiving a gas, the piston (1) being connected to a piston rod (7) emerging from the cylindrical cavity (2) through a sealing ring (5),
the suspension system comprising moreover an external tube (16), the body (15) sliding within this external tube (16), said external tube (16) being engaged around the rod of the piston (7) and comprising at its free end a lower plug (17) to which is secured the end of the piston rod (7), the space between the lower plug (17) of the external tube (16) and the sealing ring (5) determines within the external tube (16) a third chamber (18),
the suspension system comprising a single valve (4) for filling the lower and upper chambers, and means for transferring gas from one of the two working chambers (10, 11) to the other, according to predetermined conditions, the means for transferring gas are comprised of a lateral chamber (20) arranged in the inner wall of the body (15), said lateral chamber (20) suitable to successively come facing the lower chamber (10) and the upper chamber according to the position of the piston (1) in the body (15), the suspension system being **characterised in that** the lateral chamber (20) is formed by a through-aperture of the body (15), combined with the use of an outer ring secured to this body (15), and closing the external opening of said through-aperture, and **in that** the third chamber is filled with gas by a preload valve.

2. Suspension system according to claim 1, **characterised in that** the lateral chamber (20) has a longitudinal dimension that is greater than the thickness of a seal (21) arranged between an external face of the piston (1) and the internal surface of the cylindrical cavity (2).

3. Suspension system according to one of claims 1 or 2, **characterised in that** the lateral chamber (20) is arranged in the vicinity of a predetermined rest position of the piston (1).

4. Suspension system according to claim 3, **characterised in that** the lateral chamber (20) is arranged in the cylindrical cavity (2) at a longitudinal distance that is less than 10% of the stroke of the piston (1) in said cylindrical cavity (2).

5. Suspension system according to any of claims 1 to 4, **characterised in that** it comprises a spring (13) inserted into the lower chamber (10), suitable for pushing the piston (1) back to the upper chamber (11).

6. Suspension system according to any of claims 1 to 5, **characterised in that** the piston rod (7) is able to receive one or several adjusting shims in the form of longitudinal extensions.

7. Motorcycle suspension fork, **characterised in that** it comprises at least one suspension system according to one of claims 1 to 6.

8. Motorcycle suspension fork, **characterised in that** it comprises two suspension systems according to one of claims 1 to 6, one of the suspension systems comprising only one valve (4) open on its upper chamber (11), and the other suspension system comprising only one valve (19) open on its third chamber (18).

9. Motorcycle suspension fork provided with two parallel rods, **characterised in that** one of the rods of the fork is of the hydraulic type, and the other rod comprises a suspension system according to one of claims 1 to 6.
